# EUROPEAN PATENT SPECIFICATION

(11) **EP 2 909 521 B1**
(45) Date of publication and mention of the grant of the patent: **12.09.2018**
(21) Application number: 12780636.2
(22) Date of filing: 19.10.2012
(51) Int. Cl.: F16M 11/04, F16M 13/02

(54) **FLAT SCREEN MOUNTING BRACKET**
MONTAGEKLAMMER FÜR FLACHBILDSCHIRM
SUPPORT DE MONTAGE À ÉCRAN PLAT

(43) Date of publication of application: 26.08.2015
(73) Proprietor: Studer, Matias, 3400 Burgdorf (CH)
(72) Inventor: Studer, Matias, 3400 Burgdorf (CH)
(74) Representative: Keller & Partner Patentanwälte AG
(86) International application number: PCT/CH2012/000239
(87) International publication number: WO 2014/059554

(56) References cited:
- WO-A1-2009/152054
- DE-A1-102011 087 655
- US-A1- 2006 208 619
- US-A1- 2007 051 861
- US-A1- 2008 259 541

## Description

### Field of the invention

The invention relates to flat screen mounting brackets as well as their use for mounting a flat screen to a surface, for instance a wall. The invention further relates to a surface mounted flat screen system and a method of operating the same, all according to the preambles of the independent claims.

### State of the Art

A flat screen is an electronic visual display that is lighter and thinner than traditional television or display sets based on cathode ray tubes. Flat screens generally belong, depending on the technology used, to any one of the types with liquid crystal displays (LCD), plasma displays or electroluminescent displays (ELD). With the technology currently being brought to a next generation display type with organic light-emitting diodes (OLED). Flat screens can be used in various electronics, such as computers, indicators and most prominently in flat screen television systems.

The lighter and thinner design of present flat screens is in terms of interior decoration a huge progress, still, particularly for the more classically inspired interior design, a flat screen is still a dominant feature of the ambiance in question. Thus there is a need to come up with solutions that enable the installation of a flat screen of any desired size in a discreet and stylish manner.

One particular way of incorporating flat screens into an interior design concept is having them in an arrangement in which the flat screen can be hidden. The comparatively low profile of flat screens makes them ideal for mounting on planar surfaces, such as walls or ceilings.

GB 2 446 936 B (Whittome, D.**)** shows an ergonomic-decorative flat screen display configuration. It aims at camouflaging unsightly flat screen displays. The device of Whittome is adapted to be mountable to a wall surface such that the planar decoration face is in fixed relation to the wall and the flat screen display mount is positioned behind and slideable relative thereto, especially at least in a vertical direction from a first position, whereat the display is camouflaged behind the decoration face, and a second position whereat the display is spaced from the decoration face and exposed to view. The decoration face of Whittome is fixed relative to the wall and can be supplied with a decoration such as a painting, photograph, mirror or the like.

An adaptor to hang art paintings for concealing flat screens or wall recessed television for the purpose of home decoration is shown in US 2006/0208619 A1 (McLin, J. P., et al**).** McLin proposes an adjustable track mounted on the wall parallel and close to the flat screen to be hidden. The track would be mounted with one track below and one above the flat screen. The flat screen itself is fixedly mounted on the wall. The piece of art can be moved by way of rollers or ball bearers along the tracks and reach a first, flat screen hiding, and a second, flat screen exposing position.

An alternative set up is shown by US 2006/0017356 A1 (Hoss, R.**).** Hoss makes use of a support structure for the flat screen, whereupon it is moveably attached and a further cover integrated in the support structure. This device has means for moving both, the flat screen and the cover for selectively covering the flat screen. The movement is a horizontal one.

EP 1'694'064 A1 (Whittome, D.**)** discloses a flat screen mounting system. This document discloses a decorative object that is connected with its rear face with the rear face of a flat screen in a back-to-back configuration such that a chassis is formed. Said chassis is moveable such that the flat screen can be hidden from view behind the decorative object to a lower position, where the flat screen is exposed to view.

US 2008/0259541 A1 discloses a monitor suspension system. There remains a need in the industry to provide a reliable means for concealing flat screens in a design environment, that is aesthetically pleasing, easy to operate, mount and maintain as well as cheap to manufacture.

### Summary of the Invention

It is an object of the present invention to provide a flat screen mounting bracket, a use of a flat screen mounting bracket, a surface mounted flat screen system and a method of operating the same pertaining to the above field. In particular it is an object of the present invention to provide such a flat screen mounting bracket satisfying at least one of the industry needs mentioned above.

This is solved with a flat screen mounting bracket, a use of a flat screen mounting bracket, a surface mounted flat screen system and a method of operating the same according to the characterizing portions of the independent claims.

One aspect of the present invention is a flat screen mounting bracket. The flat screen mounting bracket comprises a first track guidance arrangement comprising two parallel tracks defining a first track guidance width. The flat screen mounting bracket further comprises a second track guidance arrangement comprising two parallel tracks defining a second track guidance width and wherein said second track guidance width is below the first track guidance width. A wheel, having a defined circumference and being rotably mounted around its central shaft, is also comprised in the flat screen mounting bracket of the present invention, as well as an actuator for rotating said wheel. The wheel has a diameter that is essentially equal or below the second track guidance width.

In the context of the present invention a track guidance arrangement comprising two parallel tracks shall provide means for providing a slide movement in relation to an alignment of the tracks, which, in a particular embodiment are in parallel to a ground onto which the flat screen to be mounted by the flat screen mounting bracket of the present invention shall be mounted relative to. In the context of the present invention the tracks are parallel according to the word's geometric meaning.

In the context of the present invention, essentially equal shall be defined as a dimension that differs from the dimension in comparison by no more than 1 to 2 %.

Further in the context of the present invention a width shall be defined as the length of distance spanning between the two tracks in question measured by drawing a perpendicular axis between the two parallel tracks in question. The width is most commonly expressed as a numerical value of a length, for instance in imperial or metric units. In the same context, a width that is below another width shall be defined for the purpose of the present invention as being of a lower numerical value, i.e. for instance a shorter length of said perpendicular axis spanning between the two parallel tracks. In the above example, the two tracks of the first track guidance arrangement are spaced farther apart than those two parallel tracks of the second track guidance arrangement. In the present context, such lengths of distances shall be measured as starting and ending from the most distant points of the elements in question as described above. So if, for instance, the individual tracks each comprise a diameter, the width as intended in the present invention shall be measured by drawing a perpendicular axis on the two parallel tracks and measuring from the two end points of the tracks diameters most distanced from each other. In a particular example, the said width corresponds to the height of a flat screen the mounting bracket is used for, very particularly it corresponds to the nine units of a 16:9 ratio flat screen.

In the context of the present invention, the wheel shall be understood as any essentially circular, preferably perfectly circular, arrangement that provides, by means of rotation around its axis, a support and transfer of force of movement along potentially any point of its radius. For energy efficiency purposes, the force of movement preferably engages on the circumference of the wheel. In a particular and alternative embodiment, the wheel can be replaced by a lever that is rotably mounted around a central axis, such that its rotation movement describes a circumference in an analogous manner as a wheel would. The lever has two opposing terminal end points. When the lever is rotated, these points perform a circumferential movement around the axis.

In an analogous fashion as above, a wheel having a diameter below a certain width shall, according to the context of the present invention, mean, that the length of the diameter is numerically lower than the width as defined above.

In the context of the present invention, rotably mounted shall be understood as comprising spin movement, i.e. rotation about an internal - in the present example central, axis of a wheel.

In the context of the present invention, an actuator shall be any means capable of transferring electrical energy into a motor for moving, i.e. rotating, said wheel. The exact way of transferring the force from the actuator to the wheel is at first instance secondary and subject to preference of the skilled artisan and at second instance to be by a cog wheel.

In an alternative embodiment of the present invention, the wheel is replaced with a lever. The lever is rotably mounted around a central shaft, which is the fulcrum of the lever, such that its rotation describes a defined circumference. All the further embodiments can be applied mutatis mutandis with such a lever.

With a flat screen mounting bracket according to the present invention, an aesthetically pleasing mounting bracket is provided that is efficient in energy consumption and easy to manufacture and easy to install for a user.

In a particular embodiment, the wheel has an axis of rotation perpendicular to its central shaft and said axis of rotation is further perpendicular to a surface on which the flat screen mounting bracket can be installed.

In a particular embodiment, the flat screen mounting bracket further comprises means for being installed unto a surface. In a further particular embodiment those means comprise means for bolting down the flat screen mounting bracket onto the surface, for instance holes through which screws can be bolted into the surface in question. In a particular embodiment the surface onto which the flat screen mounting bracket is adapted to be mounted on is an essentially planar surface, such as a wall or a ceiling.

In a particular embodiment, the wheel has a diameter corresponding to between 90 % to 98 % of the second track guidance width, further in particular of between 94 % and 95 % of the second track guidance width. The percentage value shall be understood as referring to the absolute value of the width and diameter.

It has been surprisingly found that this relation of diameter to second track guidance width provides an optimal result in operation, i.e. when the wheel is rotated. The flat screen mounting bracket is particularly suited for flat screens having the 16:9 aspect ratio. This aspect ratio has become the most common aspect ratio for televisions and computer monitors and is also the international standard format of HDTV, Full HD, non-HD digital television and analogue widescreen television. The mode of operation of the flat screen mounting bracket shall be explained further below.

Thus, for use with a 16:9 flat screen, the second track guidance stands in relation to the 9 units of the height of the screen, thus the diameter of the wheel would be, according to the present invention, in the range of between 90 % to 98 % of the second track guidance width, further in particular of between 94 % and 95 % in respect to the 9 units height of the 16:9 ratio. This would translate, by means of example, into a diameter corresponding to between 8.1 and 8.82 units, further in particular to a diameter of the wheel of between 8.46 and 8.55 units. In a very particular embodiment, the diameter corresponds to approximately 8.5 units in respect to a standard flat screen 16:9 aspect ratio for which it is intended. Thereby, a movement of the wheel of 180° would result in a translation of a 16:9 flat screen corresponding to the diameter of the wheel. In a particular example, the flat screen would be translated along the respective track guidance arrangement by totally 8.5 units. Simultaneously, a cover panel would also be translated in opposite direction by totally 8.5 units. The flat screen and the panel would move a total distance of 17 units apart in the present example.

In a particular embodiment, the wheel further comprises at least two fixing points for affixing cables and said two fixing points are preferably at two radially opposite points of the circumference of the wheel.

In the context of the present invention, two radially opposite points of the circumference can be defined by drawing a fictitious straight line through the centre of the wheel. The fixing point can be equipped with any means for affixing the cables, such as for example hooks, joints, nooks, clips, hinge, spring, etc. The cable itself can be for example a rope, a string, a wire, a cable, a chain, a wrap, etc.

In a particular embodiment, the wheel is arranged to be rotably mounted around its central shaft such that it has a spin configured such as to move the at least two fixing points along the circumference of the wheel. Preferably, the wheel is arranged to be rotably mounted around its central shaft such that a spin of **180°** can be performed.

In a particular embodiment, the central shaft of the wheel is arranged such that it is equally distant from either one of the two parallel tracks defining the first track guidance width. In particular, the central shaft of the wheel is arranged such as to be on an axis parallel to either one of the two parallel tracks and in the middle of the first track guidance width.

In a particular embodiment, the first track guidance arrangement is adapted to fit a first track counterpart arrangement and the second track guidance arrangement is adapted to fit a second counterpart arrangement. The said first track counterpart arrangement is further adapted to slide along the first track guidance arrangement and said second track guidance arrangement is adapted to slide along second track guidance arrangement. The first track counterpart arrangement and the second track counterpart arrangement can be adapted to be installed on a panel or a flat screen respectively.

In a particular example, the first track counterpart arrangement and the second track counterpart arrangement are adapted to slide along the first track guidance arrangements by means of rollers. The rollers can, for instance, be installed along the length of the track counterpart arrangements such as to fit into the respective track guidance arrangements. Alternatively, the track counterpart arrangement and the respective track guidance arrangements can be coated or essentially be made of a material that has a very low friction. Silicate or carbon materials are suitable for coating the length of a track guidance arrangement for instance, while the same coating can be applied to essentially all or just any points making physical contact with track guidance arrangement of the track counterpart arrangement.

In a particular embodiment, the track counterpart arrangement makes physical contact with a respective first track guidance arrangement, preferably such contact is made by one or more rollers, alternatively said contact is low in friction.

In a particular embodiment, said first track counterpart arrangement is operably connected to said wheel and said second track guidance arrangement is operably connected to said wheel.

In a further particular embodiment, said first and said second track counterpart arrangement are operably connected by means of cables attached to a fixing point as described above.

In operation, for instance, the first and the second track counterpart arrangements are slided along the length of the respective track guidance arrangements they are mounted on in opposite direction by rotating the wheel. In this instance, the slide is a horizontal slide. In an alternative embodiment the slide is a vertical slide.

In the context of the present invention, a cable shall be understood as any means that is suited for transferring a force of movement from the wheel to any one of the track counterpart arrangements. Examples that are particularly suitable are ropes, strings, wires, cables, chains, wraps, springs, etc.

In the context of the present invention an operable connection exists, when a transfer of movement energy / force can take place.

In a particular embodiment, the actuator is at the periphery of the wheel. This can be particularly advantageous for transferring the force from the actuator to the wheel.

In a further particular embodiment, the wheel comprises cogs and the actuator comprises a cogwheel for rotating said wheel. The outer rim of the wheel can, for instance, at, or close at, the circumference of the wheel, be equipped with cogs that gear cut with a cog wheel of an actuator. An alternative solution could be to magnetize the wheel or having a high friction rim that can be moved by a corresponding counter piece on the actuator. Such an example could be realized with a rubber rim, for instance.

In a particular embodiment, the flat screen mounting bracket further comprises a control unit. The control unit is adapted to receive a process commands for the flat screen mounting bracket and/or a flat screen mounted therewith. The control unit can, for instance, be adapted to receive commands from a remote control device. For this example it would be helpful, if the control unit would provide means for receiving a signal, in particular an infrared signal. This latter example would require the means for receiving a signal to be positioned such as to have an uninhibited view to and from an operator, such as on the outside of the flat screen mounting bracket.

With the above flat screen mounting bracket, all the particular embodiments can be freely combined in a flat screen mounting bracket according to the present invention, as long as said embodiments are not technically exclusive to each other.

A flat screen mounting bracket according to the present invention provides an effective, aesthetically pleasing and cost efficient way of mounting flat screens on a planar surface, particularly a wall and at the same time providing functionality to hide or obscure the flat screen itself from view when such is desired.

Another aspect of the present invention is the use of a flat screen mounting bracket as described above for mounting a flat screen to a surface. The flat screen mounting bracket can be operated in a first and a second mode of operation, whereby the first mode of operation obstructs the flat screen from view, whereas the second mode of operation provides free view to the flat screen. This use comprises the step of providing a panel and sliding said panel with a first track counterpart arrangement into the first track guidance arrangement of the flat screen mounting bracket. It further comprises the step of sliding the flat screen with a second track counterpart arrangement into the second track guidance arrangement of the flat screen mounting bracket. Thereby, the second counterpart arrangement which is attached to the flat screen can, for instance, by fitting it into the second track arrangement, be linearly guided by said second guide arrangement. This permits, for instance, a sliding of the second counterpart arrangements along a linear guide of the second track arrangement, thus enabling a sliding motion, particularly a horizontal shift. For a person of ordinary skill in the art it would be a matter of discretion to adapt the present set up for enabling a vertical sliding motion. The same movement can be performed by the first counterpart arrangement. As a panel is fixed on the latter, a flat screen on the former, both can perform the said horizontal shift. In conjunction with the wheel described above, and by, for instance, operatively connecting the wheel at its fixing points, for instance by cable, each with one of either counterpart arrangements, a simultaneous horizontal shift can be arranged.

In a particular embodiment, in the first mode of operation the flat screen is obstructed from view by means of the panel obstructing the view.

In a particular embodiment, in the second mode of operation, the flat screen and the panel are in juxtaposition to each other, in particular in horizontal juxtaposition.

In a further particular embodiment of the present invention, the thus enabled horizontal shift, in respect to the example above, of the first counterpart arrangement and the second counterpart arrangement opposed horizontal shifts, i.e. the first counterpart arrangement either moves towards or from the second counterpart arrangement while said second counterpart arrangement performs the same movement in opposite direction. In this example, the first mode of operation, whereby the flat screen is obstructed from view, would be achieved when the first counterpart arrangement would completely overlap the second counterpart arrangement, i.e. the movement towards each other of the two counterpart arrangements would have reached its end point. Analogously, the second mode of operation, whereby the flat screen is free to view would be achieved when the first counterpart arrangement would be at the most distant point in respect to the second counterpart arrangement, i.e. the movement from each other of the two counterpart arrangements would have reached its end point. In the second mode of operation, the flat screen and the panel are in juxtaposition to each other, in particular in horizontal juxtaposition.

Another aspect of the present invention is a surface mounted flat screen system. The system comprises a flat screen mounting bracket as described above. The system further comprises a panel comprising a first counterpart arrangement, and wherein said a first counterpart arrangement is adapted to fit the first track guidance arrangement of the flat screen mounting bracket. The system further comprises a flat screen comprising a second counterpart arrangement, and wherein said second counterpart arrangement is adapted to fit the second track guidance arrangement of the flat screen mounting bracket. Said panel and said flat screen are mounted such as to be slideable towards and from each other along their respective track guidance arrangement.

In a particular embodiment, the flat screen has a 16:9 aspect ratio.

In a particular embodiment, the panel comprises a decorative element such as, for instance, a mirror, an artwork, a photograph, a design element or a pattern. In a particular embodiment, the panel can comprise a sensor for receiving signals, such as for instance an infrared sensor.

In a particular embodiment, said panel is operably connected to the wheel of the flat screen mounting bracket and said flat screen is operably connected to the wheel of the flat screen mounting bracket. In a particular embodiment, the wheel of flat screen mounting bracket comprises at least two fixing points for affixing cables to. Said two fixing points are preferably at two radially opposite points of the circumference of the wheel and have means for attaching one first cable, operably attached to the panel, and one second cable, operably attached to the flat screen.

In a particular embodiment, the wall mounted flat screen system further comprises a power source. Said power source provides electrical power to the flat screen and to the actuator of the flat screen mounting bracket simultaneously.

In a particular embodiment, the flat screen mounting bracket comprises a plug for plugging into a wall socket and receiving electrical power and a socket for receiving a power cable of a flat screen, i.e. for plugging a power cable of a flat screen in.

A further aspect of the present invention is a method of operating a wall mounted flat screen system, the method comprises the following steps:
a) providing a wall mounted flat screen system as described above;
b) turning a power source on, in particular by remote control, thereby powering the actuator of the flat screen mounting bracket;
c) rotating the wheel of the flat screen mounting bracket, and, thereby, having the panel perform a lateral slide along the first track guidance arrangement and having the flat screen perform a lateral slide along the second track guidance arrangement in opposite direction from each other, such that the panel projects itself from a first position to a second position and said flat screen projects itself from a first position to a second position, such that the flat screen is no longer obstructed from view by the panel.

In a particular aspect of the present invention, the power is turned on by means of remote control. Means for turning devices on and of by remote control are long known in the art and subject to the skilled artisans discretion. Such means can, for instance, be infrared, bluetooth, sound, Wi-Fi, light, etc.

### Thus a method of operating a wall mounted flat screen system

In the following, the present invention will be further explained by means of figures and specific embodiments without being limited thereto, though. A person of ordinary skill in the art can further deduct advantageous embodiments from the whole of the description and claims.

### Brief description of the drawings

The present invention shall be illustrated purely schematically with the following drawings:
- Fig. 1: depicts a wall mounted flat screen system according to the present invention in a second mode of operation;
- Fig. 2: depicts the system of Fig. 1 in a first mode of operation;
- Fig. 3a: depicts the system of Fig 2 in side view;
- Fig. 3b: depicts the system of Fig. 2 in bottom-up view;
- Fig. 4: depicts a flat screen mounting bracket according to the present invention;
- Fig. 5: depicts a wall mounted flat screen mounting bracket integrated in a wall mounted flat screen system according to the invention in bottom-up view.

Generally, all analogous features are provided with the same reference number, unless the contrary is explicitly stated.

### Detailed description

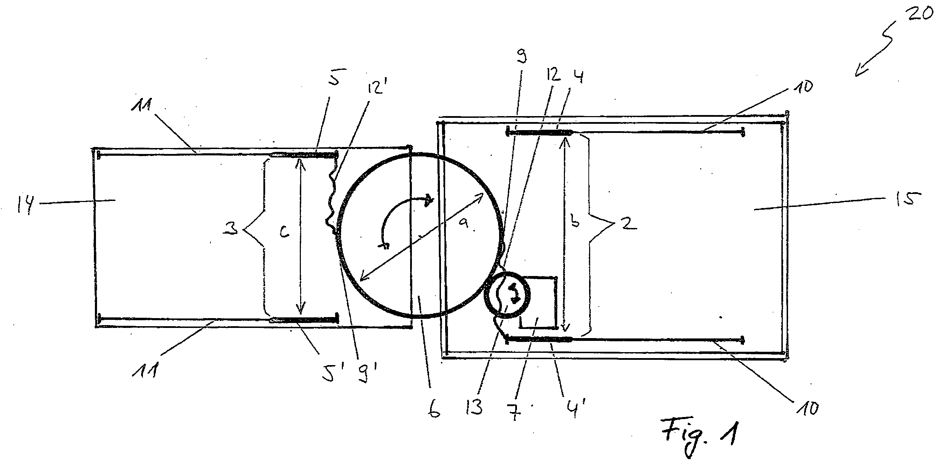

**Fig. 1** schematically depicts a wall mounted flat screen system 20 according to the present invention. The system 20 is shown in the second of two modes of operation, namely in the state, when a flat screen 14 is completely non obstructed from view by a person sitting in front of the wall mounted flat screen system 20, which would be located where the beholder of Fig. 1 would be located. Looking down on Fig. 1 from the beholder, a wheel 6 would be at least in part hidden behind the flat screen 14 and a panel 15, both of which are depicted in a transparent manner for illustration purposes only. The wheel 6 is fabricated from stainless steel, though any other material that provides a modicum of stability would also be suitable. A good alternative would be aluminium, due to its light weight, or a thermoplastic polymer. Noble brushed aluminium would make a particularly attractive alternative. The wheel 6 is rotably mounted with a central shaft that extends into the plane of the beholder and has a diameter a. An actuator 7 with a cogwheel 13, that grasps into a cogged outer rim (not shown in detail) of the wheel 6 operates the rotability of the wheel 6. In the present example, the actuator 7 and the flat screen 14 share a power source by means of a power cable extending behind the wall mounted flat screen system (not shown).

In the present example, the panel 15 can be further equipped with a decorative element, such as a mirror surface, a art print or another design element. In the depicted second mode of operation with full view from the beholder unto the flat screen 14 and the panel 15 also a portion of the wheel 6 is visible. In the present example, this is intentionally so and adds onto the aesthetic overall impression.

The wheel 6 has two fixing points 9, 9'. The first fixing point 9 has a cable 12 attached to it, which operably connects the wheel 6 with a first track counterpart arrangement 10. The second fixing point 9' has a cable 12' attached to it, which operably connects the wheel 6 with a second track counterpart arrangement 11. The first and second track counterpart arrangements 10, 11 can be manufactured from aluminium and have means for being fastened to the panel 15 or the flat screen 14, respectively. The first and second track counterpart arrangements 10, 11 comprise two parallel tracks that can be sled into a first and second track guidance arrangement 2, 3 of the flat screen mounting bracket. For ensuring a better sliding movement in the horizontal direction, the first and second track counterpart arrangements 10, 11 comprise rollers (not shown). Alternatively, the rollers can be integrated into the first and second track guidance arrangement 2, 3.

The first and second track guidance arrangement 2, 3 can be manufactured from the same material as the wheel 6, such as for instance stainless steel or aluminium. The first and second track guidance arrangement 2, 3 can also be manufactured as an integral piece (not depicted in Fig. 1). The first track guidance arrangement 2 comprises two parallel tracks 4, 4' which are distanced from each other by a first track guidance width b. The track guidance arrangement 3 also comprises two parallel tracks 5, 5' 4' which are distanced from each other by a second track guidance width c. The distance c is shorter than the distance b, i.e. the second track guidance width c is below the first track guidance width b.

In the present example, the flat screen 14 is a 16:9 aspect ratio flat screen. This aspect ratio is currently the most common aspect ratio for sold televisions and computer monitors and is also the international standard format of HDTV, Full HD, non-HD digital television and analog widescreen television (EDTV) PALplus. Such x:y aspect ratios are clearly defined, regardless of how big or small the image is, as width divided into x units of equal length and height being measured using this same length unit as y units.

In the present example, the second track guidance width c corresponds essentially to the nine units in height of the 16:9 aspect ratio of the flat screen. Further, the wheel 6 has a diameter a and said diameter corresponds to 8.5 units in respect to the flat screen 14 aspect ratio of 16:9 or, in other words, the diameter a of the wheel 6 is approximately 94.4 % of the second track guidance width c.

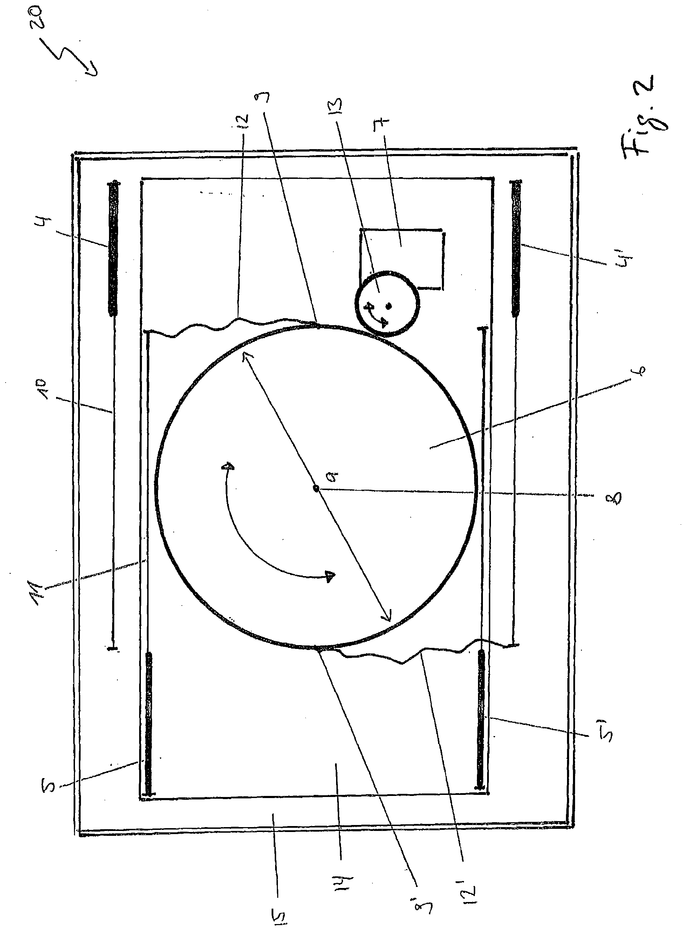

Thereby, in operation, half a spin, i.e. a 180° rotation over its own axis, of the wheel 6 suffices to horizontally shift the flat screen 14 and the panel 15 from the present second mode of operation to the first mode of operation (depicted in Fig. 2). In operation, the actuator 7 drives the cogwheel 13, which drives the wheel 6. The cables 12, 12' tighten as the fixing points 9, 9' rotate on the circumference of the wheel 6. The flat screen 14 and the panel 15 are dragged along the respective track guidance arrangement 2, 3 into the horizontal shift. After a 180° rotation over its own axis, the flat screen 14 is completely covered by the panel 15.

**Fig. 2** depicts the first mode of operation, where the flat screen 14 and the panel 15 have moved from the state of being in juxtaposition to each other of the second mode of operation, to where the flat screen 14 is completely obstructed from view by the panel 15. Again, the panel 15 is drawn transparently only for illustration purposes. The panel 15 has an area that is larger than the flat screen, although the panel 15 itself can also have a 16:9 ratio, such as to present a magnitude of the flat screen 14 dimensions. The wheel 6 has two fixing points 9, 9' whereon the cables 12, 12' engage, which provide the operable connection between the wheel 6 and the track counterpart arrangements 10, 11. The actuator 7 serves at transferring electrical power into movement and drives the wheel 6 by means of a cogwheel 13. The track counterpart arrangements 10, 11 rest on the respective parallel tracks 4, 4' (the first track counterpart arrangement 10) and 5, 5' (second track counterpart arrangement 11), which take the form of linear bearings in the present example.

The wheel 6 rests on a central shaft 8, around which it is rotably mounted.

In an alternative to the present example, the actuator is placed at or close to the central shaft 8 of the wheel 6.

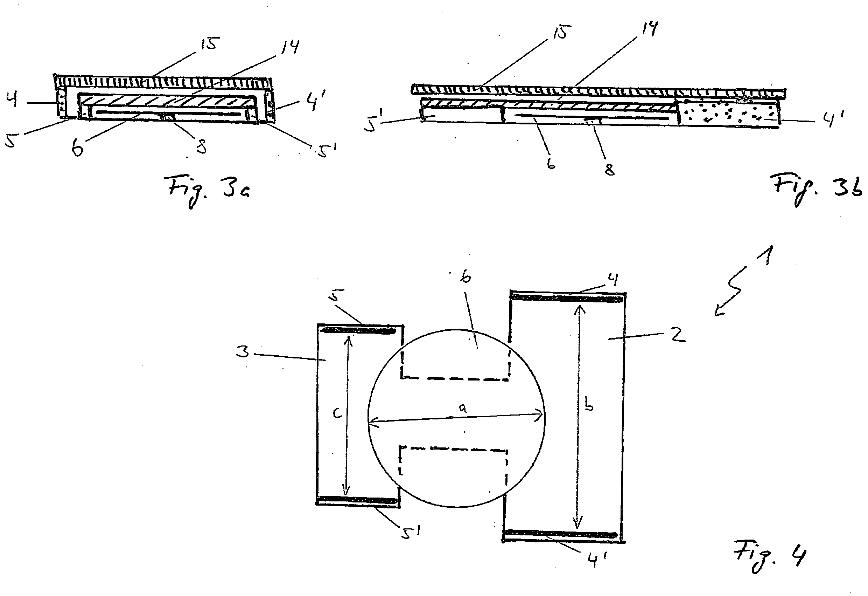

**Fig. 3a** is a side view of the arrangement shown in Fig. 2 as it could look when mounted on a wall and viewed laterally. The flat screen mounting bracket essentially comprises the wheel 6 with the central shaft 8. In the present example, the wheel 6 with the central shaft 8 rests on a cover plate resting , from which the two pairs of parallel tracks 4, 4' and 5, 5' extend into the room. The flat screen 14 is obstructed from view by the panel 15.

A bottom-up view of the arrangement shown in Fig. 2 is depicted in **Fig. 3b****.** The wheel 6 rests on a central shaft 8. The panel 15 is mounted with a track counterpart arrangement (not visible in this illustration) onto a track 4', which extends from a cover plate. The flat screen 14 is mounted onto a track 5', which extends from the same cover plate.

An exemplary embodiment of the present invention, where the tracks 4, 4' and 5, 5' extend from a cover plate and the track guidance arrangements 2, 3 are integrally formed is depicted in **Fig. 4****.** The track guidance arrangements 2, 3 are connected by a bridging section, onto which the wheel 6 is mounted by means of a central shaft 8 extending from said bridging section. The parallel tracks 4, 4' are spaced apart by a first track guidance width b. The parallel tracks 5, 5' are spaced apart by a second track guidance width c. The wheel has a diameter a. In the present example, the first track guidance width b is larger than the second track guidance width c which again is larger than diameter a. Dimensions in Fig. 4 are not in scale and for representation purposes only.

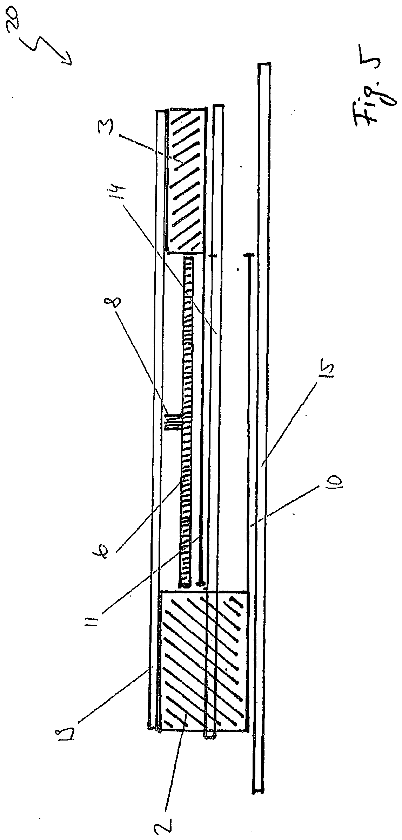

In **Fig. 5****,** a further bottom-up view is shown, where the wall mounted flat screen system is in the first mode of operation, i.e. with the view to the flat screen obstructed. In this drawing, the viewer would be located at the bottom of the page, whereas the wall would be at the top of the page. A cover plate 19 is affixed to the wall and said cover plate comprises a first track guidance arrangement 2 and a second track guidance arrangement 3. The first track guidance arrangement 2 is shown as transparent for illustration purposes only. The first track guidance arrangement 2 serves as a linear guide holding a first counterpart arrangement 10 for a panel 15 thus enabling a horizontal shift in the plane of the drawing. The second track guidance arrangement 3 serves as a linear guide holding a second counterpart arrangement 11 for a flat screen 14 thus also enabling a horizontal shift in the plane of the drawing.

A wheel 6 is mounted on a central shaft 8 on the cover plate 19.

## Claims

1. A flat screen mounting bracket (1), comprising:
a) a first track guidance arrangement (2) comprising two parallel tracks (4,4') defining a first track guidance width (b);
b) a second track guidance arrangement (3) comprising two parallel tracks (5, 5') defining a second track guidance width (c) and wherein said second track guidance width (c) is below the first track guidance width (b);
c) a wheel (6), having a defined circumference and being rotably mounted around its central shaft (8);
d) in particular an actuator (7) for rotating said wheel (6), and
**characterized in that**,
said wheel (6) has a diameter (a) that is between 90 % to 98 % of the second track guidance width (c).

2. The flat screen mounting bracket (1) of claim 1, wherein the wheel (6) has a diameter (a) corresponding to between 94 % and 95 % of the second track guidance width (c).

3. The flat screen mounting bracket (1) of claim 1 or 2, wherein the wheel (6) further comprises at least two fixing points (9, 9') for affixing cables (12, 12') to, and wherein said two fixing points (9, 9') are preferably at two radially opposite points of the circumference of the wheel (6).

4. The flat screen mounting bracket (1) of claim 3, wherein the wheel (6) is arranged to he rotably mounted around its central shaft (8), such that it has a spin configured such as to move the at least two fixing points (9, 9') along the circumference, preferably it is arranged to be rotably mounted around its central shaft (8) such that a spin of 180° can be performed.

5. The flat screen mounting bracket (1) of any one of claims 1 to 4, wherein the central shaft (8) of the wheel (6) is arranged such that it is equally distant from either one of the two parallel tracks (4, 4') defining the first track guidance width (b), in particular is arranged such as to be on an axis parallel to either one of the two parallel tracks (4, 4') and in the middle of the first track guidance width (b).

6. The flat screen mounting bracket (1) of any one of claims 1 to 5, wherein the first track guidance arrangement (2) is adapted to fit a first track counterpart arrangement (10) and said second track guidance arrangement (3) is adapted to fit a second track counterpart arrangement (11), and wherein said first track counterpart arrangement (10) is adapted to slide along the first track guidance arrangement (2) and said second track guidance arrangement (11) is adapted to slide along the second track guidance arrangement (3).

7. The flat screen mounting bracket (1) of claim 6, wherein said first track counterpart arrangement (10) is operably connected to said wheel (6) and said second track guidance arrangement (11) is operably connected to said wheel (6), in particular said first and said second track counterpart arrangement (10, 11) are operably connected by means of cables (12, 12') attached to a respective fixing point (9, 9') according to claim 2.

8. The flat screen mounting bracket (1) of any one of claims 1 to 7, wherein the actuator (7) is at the periphery of the wheel (6), in particular the wheel (6) comprises cogs and the actuator (7) comprises a cogwheel (13) for rotating said wheel (6).

9. Use of a flat screen mounting bracket (1) according to claim 1 for mounting a flat screen (14) to a wall, whereby the flat screen mounting bracket (1) can be operated in a first and a second mode of operation, whereby the first mode of operation obstructs the flat screen from view, whereas the second mode of operation provides free view to the flat screen, the use comprising the steps of:
a) providing a panel (15) and sliding said panel (15) with a first track counterpart arrangement (10) into the first track guidance arrangement (2) of the flat screen mounting bracket (1), and
b) sliding the flat screen (14) with a second track counterpart arrangement (11) into the second track guidance arrangement (3) of the flat screen mounting bracket (1),

10. The use of claim 9, whereby in the first mode of operation the flat screen (14) is obstructed from view by means of the panel (15) obstructing the view.

11. The use of claim 9 or 10, wherein in the second mode of operation, the flat screen (14) and the panel (15) are in juxtaposition to each other, in particular in horizontal juxtaposition.

12. A wall mounted flat screen system (20), comprising:
a) a flat screen mounting bracket (1) according to claim 1;
b) a panel (15) comprising a first track counterpart arrangement (10), and wherein said first counterpart arrangement (10) Is adapted to fit the first track guidance arrangement (2) of the flat screen mounting bracket (1);
c) a flat screen (14) comprising a second counterpart arrangement (11), and wherein said second counterpart arrangement (11) is adapted to fit the second track guidance arrangement (3) of the flat screen mounting bracket (1), and wherein said panel (15) and said flat screen (14) are mounted such as to be slideable towards and from each other along their respective track guidance arrangement (2, 3).

13. The wall mounted flat screen system (20) according to claim 12, whereby said panel (15) is operably connected to the wheel (6) of the flat screen mounting bracket (1) and said flat screen (14) is operably connected to the wheel (6) of the flat screen mounting bracket (1), in particular the wheel (6) of flat screen mounting bracket (1) comprises at least two fixing points (9, 9') for affixing cables (12, 12') to and wherein said two fixing points (9, 9') are preferably at two radially opposite points of the circumference of the wheel (6) and said two fixing points (9, 9') have means for attaching one first cable (12) operably attached to the panel (15) and one second cable (12') operably attached to the flat screen (14).

14. The wall mounted flat screen system (20) of any one of claims 12 or 13 further comprising a power source and wherein said power source provides electrical power to the flat screen (14) and said power source provides electrical power to the actuator (7) of the flat screen mounting bracket (7), in particular the flat screen mounting bracket (1) comprises a plug for receiving electrical power and a socket for receiving a power cable of a flat screen (14).

15. Method of operating a wall mounted flat screen system (20), comprising:
a) providing a wall mounted flat screen system (20) according to claim 12;
b) turning a power source on, in particular by remote control, thereby powering the actuator (7) of the flat screen mounting bracket (1), in particular essentially simultaneously powering the flat screen (14);
c) rotating the wheel (6) of the flat screen mounting bracket (1), and, thereby, having the panel (15) perform a lateral slide along the first track guidance arrangement (2) and having the flat screen (14) perform a lateral slide along the second track guidance arrangement (3) in opposite direction from each other, such that the panel (15) projects itself from a first position to a second position and said flat screen (14) projects itself from a first position to a second position, in particular such that the flat screen (14) is no longer obstructed from view by the panel (15).

16. A flat screen mounting bracket (1), comprising:
a) a first track guidance arrangement (2) comprising two parallel tracks (4, 4') defining a first track guidance width (b);
b) a second track guidance arrangement (3) comprising two parallel tracks (5. 5') defining a second track guidance width (c) and wherein said second track guidance width (c) is below the first track guidance width (b);
c) a lever having two opposite end points and rotably mounted with a fulcrum at its central shaft (8), such that upon rotation a defined circumference is defined by the to opposite end points;
d) an actuator (7) for rotating said lever, and
**characterized in that**,
said lever has a length (a) between the opposite end points that is between 90 % to 98 % of the second track guidance width (c).

## Patentansprüche

1. Montageklammer (1) für Flachbildschirm, aufweisend:
a) eine erste Spurführungsanordnung (2), die zwei parallele Spuren (4, 4') aufweist, welche eine erste Spurführungsbreite (b) definieren;
b) eine zweite Spurführungsanordnung (3), die zwei parallele Spuren (5, 5') aufweist, welche eine zweite Spurführungsbreite (c) definieren, und wobei die zweite Spurführungsbreite (c) unter der ersten Spurführungsbreite (b) liegt;
c) ein Rad (6), das einen definierten Umfang aufweist und drehbar um seine Zentralwelle (8) angebracht ist;
d) insbesondere ein Betätigungselement (7) zum Drehen des Rads (6), und
**dadurch gekennzeichnet, dass**
das Rad (6) einen Durchmesser (a) aufweist, der zwischen 90% bis 98% der zweiten Spurführungsbreite (c) beträgt.

2. Montageklammer (1) für Flachbildschirm nach Anspruch 1, wobei das Rad (6) einen Durchmesser (a) aufweisend, der zwischen 94% und 95% der zweiten Spurführungsbreite (c) entspricht.

3. Montageklammer (1) für Flachbildschirm nach einem der Ansprüche 1 oder 2, wobei das Rad (6) ferner mindestens zwei Befestigungspunkte (9, 9') zum Befestigen von Kabeln (12, 12') daran aufweist, und wobei die zwei Befestigungspunkte (9, 9') vorzugsweise an zwei radial gegenüberliegenden Punkten des Umfangs des Rads (6) liegen.

4. Montageklammer (1) für Flachbildschirm nach Anspruch 3, wobei das Rad (6) derart zur drehbaren Anbringung um seine Zentralwelle (8) angeordnet ist, dass es ein Rotieren aufweist, das zum Bewegen der mindestens zwei Befestigungspunkte (9, 9') entlang des Umfangs konfiguriert ist, wobei es vorzugsweise derart zur drehbaren Anbringung um seine Zentralwelle (8) angeordnet ist, dass ein Rotieren von 180º ausgeführt werden kann.

5. Montageklammer (1) für Flachbildschirm nach einem der Ansprüche 1 bis 4, wobei die Zentralwelle (8) des Rads (6) derart angeordnet ist, dass sie von jeder der zwei parallelen Spuren (4, 4'), die die erste Spurführungsbreite (b) definieren, gleich beabstandet ist, insbesondere derart angeordnet ist, dass sie auf einer Achse parallel zu jeder der zwei parallelen Spuren (4, 4') und in der Mitte der ersten Spurführungsbreite (b) liegt.

6. Montageklammer (1) für Flachbildschirm nach einem der Ansprüche 1 bis 5, wobei die erste Spurführungsanordnung (2) zum Einpassen einer ersten Spurgegenstückanordnung (10) geeignet ist und die zweite Spurführungsanordnung (3) zum Einpassen einer zweiten Spurgegenstückanordnung (11) geeignet ist, und wobei die erste Spurgegenstückanordnung (10) zum Gleiten entlang der ersten Spurführungsanordnung (2) geeignet ist und die zweite Spurgegenstückanordnung (11) zum Gleiten entlang der zweiten Spurführungsanordnung (3) geeignet ist.

7. Montageklammer (1) für Flachbildschirm nach Anspruch 6, wobei die erste Spurgegenstückanordnung (10) betriebsfähig mit dem Rad (6) verbunden ist und die zweite Spurgegenstückanordnung (11) betriebsfähig mit dem Rad (6) verbunden ist, wobei insbesondere die erste und zweite Spurgegenstückanordnung (10, 11) betriebsfähig mithilfe von Kabeln (12, 12') verbunden sind, die an einem jeweiligen Befestigungspunkt (9, 9') nach Anspruch 2 befestigt sind.

8. Montageklammer (1) für Flachbildschirm nach einem der Ansprüche 1 bis 7, wobei das Betätigungselement (7) an der Peripherie des Rads (6) liegt, wobei insbesondere das Rad (6) Zähne aufweist und das Betätigungselement (7) ein Zahnrad (13) zum Drehen des Rads (6) aufweist.

9. Gebrauch einer Montageklammer (1) für Flachbildschirm nach Anspruch 1 zum Montieren eines Flachbildschirms (14) an einer Wand, wobei die Flachbildschirm-Montageklammer (1) in einem ersten und einem zweiten Betriebsmodus betrieben werden kann, wobei der erste Betriebsmodus den Flachbildschirm vor der Sicht verbirgt, während der zweite Betriebsmodus freie Sicht zum Flachbildschirm vorsieht, wobei der Gebrauch die folgenden Schritte aufweist:
a) Vorsehen einer Tafel (15) und Schieben der Tafel (15) mit einer ersten Spurgegenstückanordnung (10) in die erste Spurführungsanordnung (2) der Flachbildschirm-Montageklammer (1), und
b) Schieben des Flachbildschirms (14) mit einer zweiten Spurgegenstückanordnung (11) in die zweite Spurführungsanordnung (3) der Flachbildschirm-Montageklammer (1).

10. Gebrauch nach Anspruch 9, wobei der Flachbildschirm (14) im ersten Betriebsmodus mithilfe der Tafel (15), die die Sicht versperrt, vor der Sicht verborgen ist.

11. Gebrauch nach einem der Ansprüche 9 oder 10, wobei der Flachbildschirm (14) und die Tafel (15) im zweiten Betriebsmodus in Nebeneinanderstellung zueinander liegen, insbesondere in horizontaler Nebeneinanderstellung.

12. Wandmontiertes Flachbildschirmsystem (20), aufweisend:
a) eine Montageklammer (1) für Flachbildschirm nach Anspruch 1;
b) eine Tafel (15), die eine erste Spurgegenstückanordnung (10) aufweist, und wobei die erste Spurgegenstückanordnung (10) zum Einpassen in die erste Spurführungsanordnung (2) der Flachbildschirm-Montageklammer (1) geeignet ist;
c) einen Flachbildschirm (14), der eine zweite Spurgegenstückanordnung (11) aufweist, und wobei die zweite Spurgegenstückanordnung (11) zum Einpassen in die zweite Spurführungsanordnung (3) der Flachbildschirm-Montageklammer (1) geeignet ist, und wobei
die Tafel (15) und der Flachbildschirm (14) derart montiert sind, dass sie zueinander hin und voneinander weg entlang ihrer jeweiligen Spurführungsanordnung (2, 3) verschiebbar sind.

13. Wandmontiertes Flachbildschirmsystem (20) nach Anspruch 12, wobei die Tafel (15) betriebsfähig mit dem Rad (6) der Flachbildschirm-Montageklammer (1) verbunden ist und der Flachbildschirm (14) betriebsfähig mit dem Rad (6) der Flachbildschirm-Montageklammer (1) verbunden ist, wobei insbesondere das Rad (6) der Flachbildschirm-Montageklammer (1) mindestens zwei Befestigungspunkte (9, 9') zum Befestigen von Kabeln (12, 12') daran aufweist, und wobei die zwei Befestigungspunkte (9, 9') vorzugsweise an zwei radial gegenüberliegenden Punkten des Umfangs des Rads (6) liegen und die zwei Befestigungspunkte (9, 9') Mittel zum Anbringen eines ersten Kabels (12), das betriebsfähig an der Tafel (15) angebracht ist, und eines zweiten Kabels (12'), das betriebsfähig am Flachbildschirm (14) angebracht ist, aufweisen.

14. Wandmontiertes Flachbildschirmsystem (20) nach einem der Ansprüche 12 oder 13, ferner aufweisend eine Stromquelle, und wobei die Stromquelle dem Flachbildschirm (14) elektrischen Strom zuführt und die Stromquelle dem Betätigungselement (7) der Flachbildschirm-Montageklammer (1) elektrischen Strom zuführt, insbesondere wobei die Flachbildschirm-Montageklammer (1) einen Stecker zum Aufnehmen von elektrischem Strom und eine Buchse zum Aufnehmen eines Stromkabels eines Flachbildschirms (14) aufweist.

15. Verfahren zum Betreiben eines wandmontierten Flachbildschirmsystems (20), aufweisend:
a) Vorsehen eines wandmontierten Flachbildschirmsystems (20) nach Anspruch 12;
b) Einschalten einer Stromquelle, insbesondere durch Fernbedienung, wodurch das Betätigungselement (7) der Flachbildschirm-Montageklammer (1) mit Strom versorgt wird, wobei insbesondere im Wesentlichen gleichzeitig der Flachbildschirm (14) mit Strom versorgt wird;
c) Drehen des Rads (6) der Flachbildschirm-Montageklammer (1), und dadurch
Bewirken, dass die Tafel (15) eine seitliche Verschiebung entlang der ersten Spurführungsanordnung (2) ausführt, und Bewirken, dass der Flachbildschirm (14) eine seitliche Verschiebung entlang der zweiten Spurführungsanordnung (3) in Gegenrichtung zueinander ausführt, sodass sich die Tafel (15) von einer ersten Position zu einer zweiten Position versetzt und sich der Flachbildschirm (14) von einer ersten Position zu einer zweiten Position versetzt, insbesondere derart, dass der Flachbildschirm (14) nicht mehr durch die Tafel (15) vor der Sicht verborgen ist.

16. Montageklammer (1) für Flachbildschirm, aufweisend:
a) eine erste Spurführungsanordnung (2), die zwei parallele Spuren (4, 4') aufweist, welche eine erste Spurführungsbreite (b) definieren;
b) eine zweite Spurführungsanordnung (3), die zwei parallele Spuren (5, 5') aufweist, welche eine zweite Spurführungsbreite (c) definieren, und wobei die zweite Spurführungsbreite (c) unter der ersten Spurführungsbreite (b) liegt;
c) einen Hebel, der zwei gegenüberliegende Endpunkte aufweist und drehbar mit einem Hebelpunkt an seiner Zentralwelle (8) angebracht ist, sodass auf Drehung hin ein definierter Umfang durch die gegenüberliegenden Endpunkte definiert ist;
d) ein Betätigungselement (7) zum Drehen des Hebels, und
**dadurch gekennzeichnet, dass**
der Hebel eine Länge (a) zwischen den gegenüberliegenden Endpunkten aufweist, die zwischen 90% bis 98% der zweiten Spurführungsbreite (c) beträgt.

## Revendications

1. Support de montage à écran plat (1), comprenant :
a) un premier arrangement de guidage sur piste (2) comprenant deux pistes parallèles (4, 4') définissant une première largeur de guidage sur piste (b);
b) un second arrangement de guidage sur piste (3) comprenant deux pistes parallèles (5, 5') définissant une seconde largeur de guidage sur piste (c) et dans lequel ladite seconde largeur de guidage sur piste (c) est inférieure à la première largeur de guidage sur piste (b);
c) une roue (6), ayant une circonférence définie et étant montée de manière rotative autour de son axe central (8);
d) en particulier un actionneur (7) pour faire tourner ladite roue (6), et
**caractérisé en ce que**,
ladite roue (6) a un diamètre (a) qui est compris entre 90 % et 98 % de la seconde largeur de guidage sur piste (c).

2. Support de montage à écran plat (1) selon la revendication 1, dans lequel la roue (6) a un diamètre (a) correspondant entre 94 % et 95 % de la seconde largeur de guidage sur piste (c).

3. Support de montage à écran plat (1) selon la revendication 1 ou 2, dans lequel la roue (6) comprend en outre au moins deux points de fixation (9, 9') pour la fixation des câbles (12, 12'), et dans lequel lesdits deux points de fixation (9, 9') sont de préférence à deux points radialement opposés de la circonférence de la roue (6).

4. Support de montage à écran plat (1) selon la revendication 3, dans lequel la roue (6) est agencée pour être montée de manière rotative autour de son axe central (8), de telle sorte qu'elle a une rotation configurée de manière à déplacer lesdits au moins deux points de fixation (9, 9') le long de la circonférence, de préférence elle est agencée pour être montée de manière rotative autour de son axe central (8) de telle sorte qu'une rotation de 180° puisse être effectuée.

5. Support de montage à écran plat (1) selon l'une quelconque des revendications 1 à 4, dans lequel l'axe central (8) de la roue (6) est disposé de telle sorte qu'il est également distant de l'une ou l'autre des deux pistes parallèles (4, 4') définissant la première largeur de guidage sur piste (b), en particulier ledit axe central est disposé de manière à se trouver sur un axe parallèle à l'une des deux pistes parallèles (4, 4') et au milieu de la première largeur de guidage sur piste (b),

6. Support de montage à écran plat (1) selon l'une quelconque des revendications 1 à 5, dans lequel le premier arrangement de guidage sur piste (2) est configuré pour s'adapter à un premier arrangement de contre-plaque sur piste (10) et ledit second arrangement de guidage sur piste (3) est configuré pour s'adapter à un second arrangement de contre-plaque sur piste (11), et dans lequel ledit premier arrangement de contre-plaque sur piste (10) est adapté pour coulisser le long du premier arrangement de guidage sur piste (2) et ledit second arrangement de guidage sur piste (11) est configuré pour coulisser le long du second arrangement de guidage sur piste (3).

7. Support de montage à écran plat (1) selon la revendication 6, dans lequel ledit premier arrangement de contre-plaque sur piste (10) est relié de manière opérationnelle à ladite roue (6) et ledit second arrangement de contre-plaque sur piste (11) est relié de manière opérationnelle à ladite roue (6), en particulier lesdits premier et second arrangement de contre-plaque sur piste (10, 11) sont reliés de manière opérationnelle au moyen de câbles (12, 12') fixés à un point de fixation respectif (9, 9') selon la revendication 2.

8. Support de montage à écran plat (1) selon l'une quelconque des revendications 1 à 7, dans lequel l'actionneur (7) se trouve à la périphérie de la roue (6), en particulier la roue (6) comprend des dents et l'actionneur (7) comprend une roue dentée (13) pour faire tourner ladite roue (6).

9. Utilisation d'un support de montage à écran plat (1) selon la revendication 1 pour le montage d'un écran plat (14) sur une paroi, le support de montage à écran plat (1) pouvant être utilisé dans un premier et un second mode de fonctionnement, le premier mode de fonctionnement empêchant la visibilité de l'écran plat, tandis que le second mode de fonctionnement offre une vue libre sur l'écran plat, l'utilisation comprenant les étapes consistant à :
a) fournir un panneau (15) et faire coulisser ledit panneau (15) avec un premier arrangement de contre-plaque sur piste (10) dans le premier arrangement de guidage sur piste (2) du support de montage à écran plat (1), et
b) faire glisser l'écran plat (14) avec un second arrangement de contre-plaque sur piste (11) dans le second arrangement de guidage sur piste (3) du support de montage à écran plat (1).

10. Utilisation selon la revendication 9, selon laquelle, dans le premier mode de fonctionnement, l'écran plat (14) est obstrué par le panneau (15) qui obstrue la visibilité.

11. Utilisation de la revendication 9 ou 10, dans laquelle, dans le second mode de fonctionnement, l'écran plat (14) et le panneau (15) sont juxtaposés l'un à l'autre, en particulier en juxtaposition horizontale.

12. Système à écran plat monté à une paroi (20), comprenant :
a) un support de montage à écran plat (1) selon la revendication 1;
b) un panneau (15) comprenant un premier arrangement de contre-plaque sur piste (10), et dans lequel ledit premier arrangement de contre-plaque (10) est configuré pour s'adapter au premier arrangement de guidage sur piste (2) du support de montage à écran plat (1);
c) un écran plat (14) comprenant un second arrangement de contre-plaque (11), et dans lequel ledit second arrangement de contre-plaque (11) est configuré pour s'adapter au second arrangement de guidage sur piste (3) du support de montage à écran plat (1), et dans lequel ledit panneau (15) et ledit écran plat (14) sont montés de manière à pouvoir coulisser en s'éloignant ou en s'approchant mutuellement le long de leur arrangement de guidage sur piste respectif (2, 3).

13. Système à écran plat monté à une paroi (20) selon la revendication 12, dans lequel ledit panneau (15) est relié de manière opérationnelle à la roue (6) du support de montage à écran plat (1) et ledit écran plat (14) est relié de manière opérationnelle à la roue (6) du support de montage à écran plat (1), en particulier la roue (6) du support de montage à écran plat (1) comprend au moins deux points de fixation (9, 9') pour la fixation des câbles (12, 12') et dans lequel lesdits deux points de fixation (9, 9') sont de préférence à deux points radialement opposés de la circonférence de la roue (6) et lesdits deux points de fixation (9, 9') ont des moyens pour fixer un premier câble (12) fixé de manière opérationnelle au panneau (15) et un second câble (12') fixé de manière opérationnelle à l'écran plat (14).

14. Système à écran plat monté à une paroi (20) selon l'une quelconque des revendications 12 ou 13 comprenant en outre une source d'alimentation et dans lequel ladite source d'alimentation fournit une alimentation électrique à l'écran plat (14) et ladite source d'alimentation fournit une alimentation électrique à l'actionneur (7) du support de montage à écran plat (7), en particulier le support de montage à écran plat (1) comprend une fiche pour recevoir l'alimentation électrique et une prise pour recevoir un câble d'alimentation d'un écran plat (14).

15. Procédé de fonctionnement d'un système à écran plat monté à une paroi (20), consistant à :
a) fournir un système à écran plat monté à une paroi (20) selon la revendication 12;
b) mettre une source d'alimentation sous tension, notamment par télécommande, alimentant ainsi l'actionneur (7) du support de montage à écran plat (1), en particulier alimenter essentiellement simultanément l'écran plat (14);
c) faire tourner la roue (6) du support de montage à écran plat (1), et, par conséquent, fait en sorte que le panneau (15) effectuer un glissement latéral le long du premier arrangement de guidage sur piste (2) et que l'écran plat (14) effectue un glissement latéral le long du second arrangement de guidage sur piste (3) dans la direction opposée l'un de l'autre, de sorte que le panneau (15) se projette d'une première position à une seconde position et ledit écran plat (14) se projette d'une première position à une seconde position, en particulier de sorte que la visibilité de l'écran plat (14) n'est plus obstruée par le panneau (15) .

16. Support de montage à écran plat (1), comprenant :
a) un premier arrangement de guidage sur piste (2) comprenant deux pistes parallèles (4, 4') définissant une première largeur de guidage sur piste (b);
b) un second arrangement de guidage sur piste (3) comprenant deux pistes parallèles (5, 5') définissant une seconde largeur de guidage sur piste (c) et dans lequel ladite seconde largeur de guidage sur piste (c) est inférieure à la première largeur de guidage sur piste (b);
c) un levier ayant deux points d'extrémité opposés et monté de manière rotative avec un pivot à son axe central (8), de telle sorte que, lors de la rotation, une circonférence définie est définie par les deux points d'extrémité opposés;
d) un actionneur (7) pour faire tourner ledit levier, et
**caractérisé en ce que**,
ledit levier a une longueur (a) entre les points d'extrémité opposés qui est comprise entre 90 % et 98 % de la seconds largeur de guidage sur voie (c).
